Europäisches Patentamt

European Patent Office

Office européen des brevets

(19)

(11) **EP 0 713 119 A1**

(12) **DEMANDE DE BREVET EUROPEEN**

(43) Date de publication:
22.05.1996 Bulletin 1996/21

(51) Int Cl.⁶: **G02B 26/10**, H04N 3/15,
H04N 5/33

(21) Numéro de dépôt: 95402544.1

(22) Date de dépôt: 14.11.1995

(84) Etats contractants désignés:
DE FR GB IT

(30) Priorité: 18.11.1994 FR 9413841

(71) Demandeur: THOMSON-CSF
75008 Paris (FR)

(72) Inventeurs:
• Couderc, Georges
F-92402 Courbevoie Cedex (FR)

• Micheron, François
F-92402 Courbevoie Cedex (FR)

(74) Mandataire: Lincot, Georges
THOMSON-CSF,
SCPI,
B.P. 329,
50, rue Jean-Pierre Timbaud
F-92402 Courbevoie Cédex (FR)

(54) **Dispositif de veille panoramique infrarouge statique à détecteurs matriciels multiples**

(57) L'invention vise à réaliser une détection et une capacité de poursuite efficace et précise grâce à une organisation particulière comportant un dispositif de microbalayage commun à tous les détecteurs.

Selon un exemple de réalisation, le dispositif selon l'invention se compose d'un bâti (10) de révolution autour d'un axe site (Z'Z), et qui porte des groupes optiques afocaux (11) couplés respectivement à des groupes optiques de focalisation (12) pour projeter les flux lumineux ($F_i$) provenant des scènes observées et former des images sur des détecteurs fixes (31). Des prismes (P), d'angle au sommet et d'orientation prédéterminés, sont répartis en cercle sur un tambour rotatif (20) d'axe confondu avec l'axe site (Z'Z) de sorte que, lors de la rotation du tambour (20), chaque prisme (P) intercepte, en faisceaux parallèles, et dévie le flux d'observation ($F_i$) de manière à provoquer un déplacement virtuel des capteurs de chaque détecteur (31) correspondant à un pas de microbalayage.

Application à l'imagerie panoramique, notamment à l'observation simultanée par plusieurs opérateurs.

FIG.1

**Description**

L'invention concerne le domaine de la veille panoramique et plus particulièrement de la veille panoramique infrarouge dans les bandes spectrales de transmission de l'atmosphère, à savoir 3 à 5 µm ou 8 à 12 µm.

La veille panoramique est destinée à permettre une observation dans un champ couvrant 360° afin de détecter et de suivre tout objet présent dans ce champ d'observation. L'invention s'applique en particulier à la détection de cible, au guidage multimissile, à l'imagerie infrarouge et à la détection de gaz polluants.

La veille panoramique doit permettre, pour une portée donnée, une détection et une poursuite efficaces et précises. Or les veilles panoramiques existantes ne permettent pas d'obtenir un taux de rafraîchissement, une sensibilité et une résolution d'image suffisants pour fournir une détection et une poursuite de qualité.

Il existe en particulier des veilles panoramiques à un ou deux détecteurs tournants associés ou non à un miroir, afin de couvrir l'espace sur 360°. Les détecteurs utilisés comportent un grand nombre de capteurs élémentaires disposés sur un petit nombre de rangées, les détecteurs sont alors en forme de barrettes, ou disposés selon une forme matricielle, on parle alors de détecteurs matriciels. De telles veilles, décrites par exemple dans le brevet FR-9009967 (57638), présente une faible cadence d'analyse de l'espace, de l'ordre de quelques Hertz, ce qui fournit un taux de rafraîchissement de l'image de détection insuffisant pour effectuer une poursuite de cible efficace. D'autre part, lorsque de tels détecteurs sont utilisés pour couvrir 360° en gisement, le temps d'intégration de chaque capteur élémentaire reste de l'ordre de quelques dizaines de microsecondes, ce qui rend le dispositif de veille peu sensible et augmente d'autant le taux de fausses alarmes.

Par ailleurs, afin d'augmenter la résolution de la détection, et donc sa précision, il est connu de réaliser un microbalayage du détecteur de manière à augmenter artificiellement le nombre de capteurs élémentaires de ce détecteur. Un tel microbalayage est obtenu habituellement en insérant, dans le système optique associé au détecteur, une ou plusieurs lames ou prismes (2 prismes associés formant un diasporamètre) en rotation ou en vibration dont la fréquence est adaptée à la cadence de rafraîchissement de l'image de détection. Or de telles lames, décrites par exemple dans les brevet EP- 282 182 , ne résistent pas à des fréquences d'utilisation compatibles avec une cadence d'analyse supérieure à quelques Hertz.

L'invention vise à pallier les inconvénients de l'art antérieur, et notamment à obtenir une détection et une capacité de poursuite efficaces et précises, grâce en particulier à un dispositif de microbalayage animé d'un mouvement de rotation et comportant des prismes d'angle et d'orientation adaptés, disposés en cercle autour de détecteurs matriciels fixes disposés également en cercle. Le dispositif de microbalayage est commun à tous les détecteurs matriciels, et chaque détecteur subit le même microbalayage réalisé par le passage successif des prismes. Le microbalayage peut être décomposé, pour chaque détecteur, en un nombre de pas successifs, correspondant aux positions occupées virtuellement par les capteurs élémentaires d'un détecteur, et égal au nombre de prismes de caractéristiques différentes (orientation, angle au sommet) qui passent devant ce détecteur.

Plus précisément, l'invention a pour objet un dispositif de veille panoramique infrarouge statique à détecteurs matriciels multiples composés de capteurs élémentaires, comportant un système optique associé à chaque détecteur pour projeter sur celui-ci un flux lumineux d'observation provenant d'une portion d'espace limitée par un champ de vue d'ouverture définie en fonction du nombre de détecteurs, caractérisé en ce que les détecteurs sont fixes et répartis en cercle autour d'un axe site, et en ce que des prismes sont répartis en cercle sur un tambour rotatif d'axe de rotation confondu avec l'axe site de sorte que, lors de la rotation de ce tambour, chaque prisme intercepte successivement en faisceau parallèle, le flux lumineux traversant le système d'optique de chaque détecteur, les prismes présentant un angle au sommet de valeur et d'orientation déterminés pour provoquer alors une déviation élémentaire des flux lumineux d'observation correspondant à un déplacement élémentaire virtuel de chaque capteur et définissant un pas de microbalayage.

L'invention présente l'avantage de pouvoir mettre en oeuvre un dispositif de microbalayage unique, commun à tous les détecteurs, et de structure simple en regard de l'application multiple réalisée, à savoir la mise en oeuvre simultanée d'un grand nombre, par exemple 12, de microbalayages. Il est alors possible d'obtenir, dans les conditions évoquées, des microbalayages compatibles, de cadences d'analyse de l'espace élevées, de l'ordre de 20 à 50 Hz, une sensibilité optimisée avec un temps d'intégration des charges de chaque capteur élémentaire de l'ordre de la milliseconde. D'autre part, le microbalayage réalisé permet d'atteindre pour chaque détecteur une résolution de l'ordre de celle obtenue par l'oeil, c'est-à-dire environ 0,3 mrad.

En effet, les angles des prismes utilisés pour obtenir le microbalayage sont très faibles, de l'ordre de quelques dixièmes de milliradians. Dans ces conditions, les rayons utiles provenant du champ d'observation sont déviés de la même façon par la traversée d'un même prisme, quel que soit leur angle d'incidence situé dans ouverture de champ de valeur même élevée, par exemple +/- 20°. De même, la rotation du prisme pendant la durée d'intégration des charges du détecteur correspondant n'affecte quasiment pas la valeur de la déviation. Il s'ensuit que chaque point d'image formé ne "glisse" pas pendant la durée d'intégration des charges, comme c'est le cas avec les dispositifs de microbalayage connus ; d'autre part, le montage des prismes peut être effectué avec une grande tolérance.

Selon une caractéristique avantageuse, un ou deux emplacements supplémentaires de prisme peuvent être occupés par un ou deux corps noirs dont la température, proche de la température ambiante, est maintenue à une valeur fixe. L'intensité des signaux obtenus permet d'effectuer un réglage en niveau avec un corps noir, et de plus en gain avec deux corps noirs, pour tous les capteurs élémentaires d'une même matrice de détection. Ce même réglage peut être obtenu à l'aide de lames dépolies ou de tout moyen permettant d'effectuer une défocalisation pour illuminer l'ensemble du détecteur.

Une autre caractéristique avantageuse est de disposer un ou deux filtres détecteurs de gaz polluants atmosphériques dans l'emplacement d'un ou deux prismes de microbalayage. De tels filtres sont décrits dans le brevet EP 544 962 et permettent de détecter la présence d'un gaz par une mesure différentielle.

Selon une forme de réalisation préférée de l'invention, chaque emplacement de prisme du tambour rotatif constituant une plage occupée soit par un prisme de microbalayage, soit par un corps noir ou un filtre, le nombre de plages est égal au nombre de détecteurs matriciels. Dans ces conditions, l'électronique de commande est simplifiée puisqu'un seul dispositif de synchronisation de pas des microbalayages peut être utilisé.

Selon un premier exemple de réalisation, les détecteurs matriciels et les prismes de microbalayage sont situés dans des plans sensiblement parallèles à l'axe site, et chaque système optique peut comprendre un groupe optique afocal frontal pour réaliser une meilleure adaptation aux conditions opérationnelles.

Selon un autre exemple de réalisation, les détecteurs matriciels et les emplacements de prismes de microbalayage sont disposés dans des plans parallèles entre eux et perpendiculaires à l'axe site. Un miroir de renvoi permet alors réfléchir le flux utile provenant du champ d'observation vers un détecteur matriciel, chaque flux dévié étant coupé par le tambour rotatif.

D'autres caractéristiques et avantages apparaîtront à la lecture de la description détaillée qui suit, accompagnés des figures annexées qui représentent respectivement :

- la figure 1, une vue en coupe selon l'axe site d'un exemple de réalisation schématisé d'un dispositif de veille panoramique selon l'invention ;
- la figure 2, le même exemple de réalisation schématisé vu en coupe selon un plan perpendiculaire à l'axe site ;
- la figure 3, un exemple de microbalayage d'un détecteur matriciel obtenu à l'aide des prismes de microbalayage d'un dispositif de veille selon l'invention ;
- la figure 4, les orientations des différents prismes de microbalayage pour mettre en oeuvre un microbalayage selon la figure précédente;
- la figure 5, une vue en coupe selon un plan contenant l'axe site d'un autre exemple de réalisation d'un dispositif de veille panoramique selon l'invention.

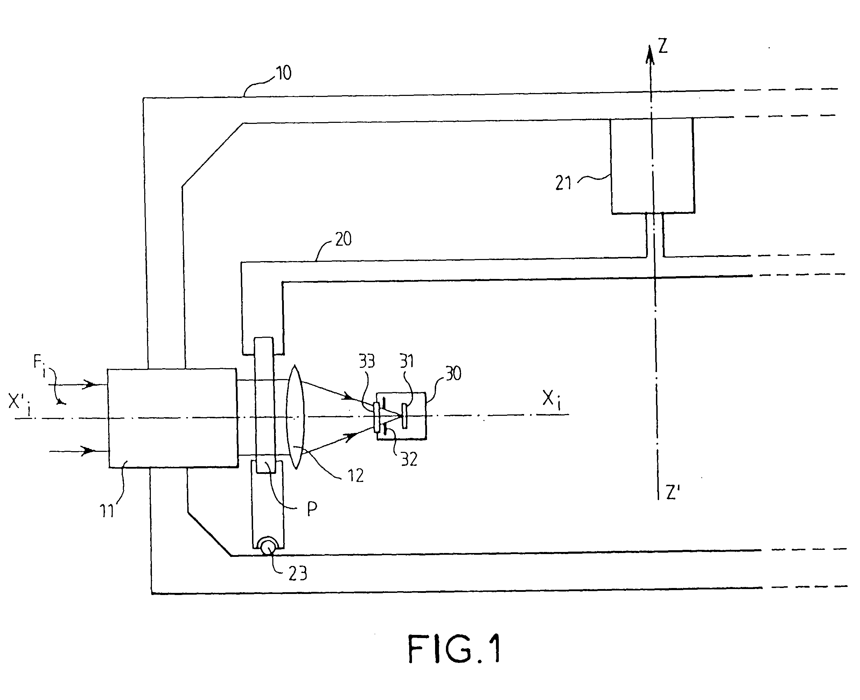

La figure 1 représente, en coupe selon un plan contenant l'axe site Z'Z, un exemple de réalisation schématisé d'un dispositif de veille panoramique infrarouge selon l'invention. Sur cette figure, une structure 10 présente un axe de révolution confondu avec l'axe site Z'Z et porte des groupes optiques afocaux 11 régulièrement répartis en cercle autour de l'axe site. A l'intérieur de la structure 10, se trouve un tambour 20 qui est entraîné en rotation à l'aide d'un moteur 21 autour de son axe de révolution confondu avec l'axe site Z'Z. Le tambour 20 porte des prismes P dans des emplacements qui sont répartis en cercle et de manière régulière autour de l'axe site sur la partie du tambour qui est de révolution autour de cet axe site. Dans l'exemple de réalisation illustré, le tambour 20 présente une face cylindrique de révolution autour de l'axe site Z'Z, et les prismes P sont montés dans cette face de sorte qu'ils se présentent sensiblement parallèlement à l'axe site.

Chaque groupe optique afocal 11 est couplé à un groupe optique de focalisation 12 de sorte que le flux lumineux $F_i$, provenant de la scène observée dans un champ d'observation défini autour d'un axe $X'_iX_i$, soit projeté sur un détecteur matriciel 31. Chaque détecteur matriciel est disposé dans un cryostat 30 qui dispose d'un écran froid 32 qui limite le flux lumineux qui atteint le détecteur 31 au flux utile, refroidi à l'aide d'un doigt froid couplé à tout dispositif de refroidissement connu. Le dispositif de refroidissement peut avantageusement être un compresseur unique pour tous les cryostats. Les détecteurs fixes peuvent alors être équipés d'une sonde de détente Joule Thomson reliée au compresseur.

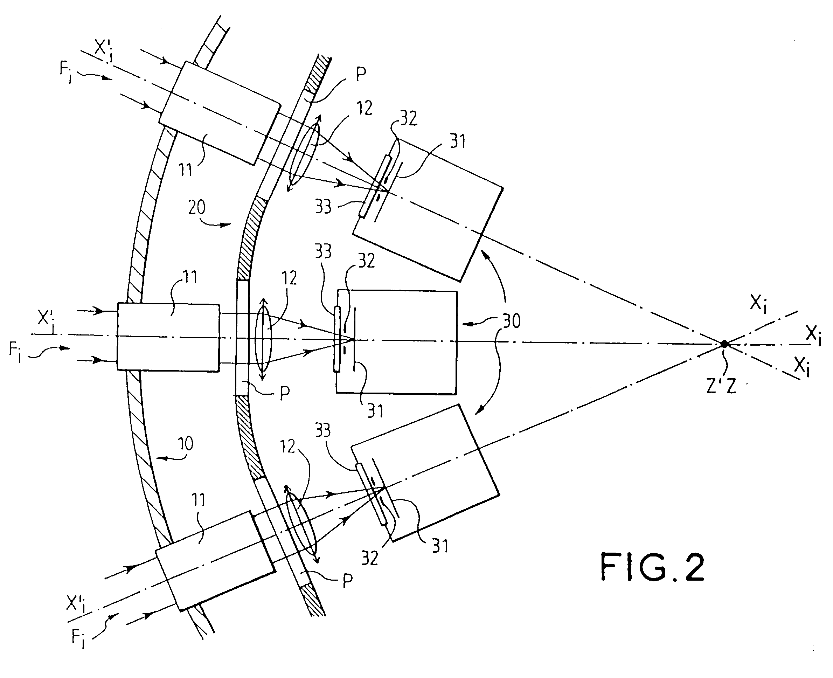

La partie du tambour 20 qui porte les prismes P prend appui sur la base de la structure 10 par des roulements 23. Lors de la rotation du tambour 20, les prismes P interceptent successivement les flux lumineux $F_i$ en faisceau parallèle, entre le groupe afocal 11 et le groupe de focalisation 12. Une vue de ce même exemple de réalisation, en coupe partielle selon les axes XX'$_i$, est présenté sur la figure 2. Sur cette figure, les éléments de la figure 1 étant représentés avec les mêmes signes de référence, il apparaît que les axes optiques $X'_iX_i$ rayonnent perpendiculairement à l'axe Z'Z ainsi que l'ensemble des éléments disposés le long de ces axes $X'_iX_i$ à savoir les groupes afocaux 11, les groupes de focalisation 12, et les cryostats 30. Les figures 1 et 2 représentent les prismes P au moment où ils interceptent les faisceaux $F_i$, c'est-à-dire quand ils passent dans le système optique, composé du groupe afocal 11 et du groupe de focalisation 12, associé à chaque détecteur matriciel 31.

Les détecteurs matriciels sont formés d'un grand nombre de capteurs élémentaires, par exemple de 128 x 128 capteurs ou 256 x 256 capteurs ou plus, disposés sous forme matricielle dans un substrat. Les capteurs sont constitués classiquement de matériaux photosensibles dans la bande infrarouge utilisée, par exemple de l'antimoine d'indium (InSb) pour la bande 3 à 5 $\mu$m ou un matériau composite de mercure-cadmium-tellure (Hg-Cd-Te) pour la bande infrarouge 3 à 5 $\mu$m ou 8 à 12 $\mu$m. Les capteurs élémentaires ont classiquement une forme sensiblement carrée, par exemple de côté égal à 15 ou 20 $\mu$m, et peuvent être éloignés les uns des autres d'une distance pouvant atteindre 3 à 5 fois leur dimension.

Cet éloignement facilite la résolution des contraintes technologiques et permet l'insertion de puits de potentiel de fortes capacités. Le traitement électronique des charges intégrées proportionnellement aux flux reçus, nécessite en effet la présence de capacités de stockage et de conducteurs de liaisons intégrés. Dans ces conditions, un détecteur matriciel se présente sous une forme sensiblement carrée ou rectangulaire de côté égal à 10 à 20 mm ou plus.

Afin d'améliorer la résolution de la détection obtenue à l'aide de tels détecteurs, les prismes P présentent un angle au sommet de valeur et d'orientation telles qu'un microbalayage de chaque capteur élémentaire déplace virtuellement celui-ci d'une position intermédiaire à une autre, en jusqu'à revenir à sa position initiale, lorsque les prismes passent successivement devant le détecteur, chaque prisme correspondant à une position de microbalayage.

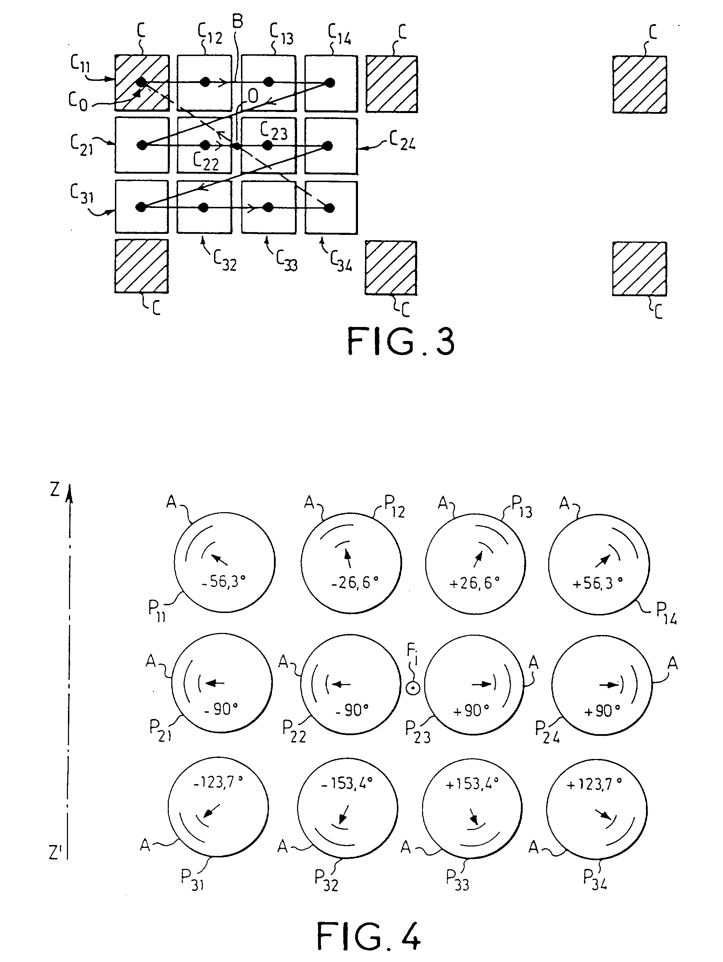

Plus concrètement, la figure 3 illustre les positions virtuelles successives d'un capteur d'un détecteur matriciel pour un microbalayage en zigzag à douze positions, obtenus à l'aide d'un tambour rotatif à douze prismes. Sur la figure, n'apparaît qu'un nombre limité de capteurs C d'un détecteur matriciel. Pour l'un de ces capteurs élémentaires, il a été figuré les douze positions successives, $C_{11}$ à $C_{34}$, obtenues à l'aide du passage de chacun des douze prismes disposés dans le tambour selon la description qui précède. Le balayage B représenté est une ligne qui relie les positions successives du centre $C_0$ du capteur C, obtenues par la déviation correspondante du faisceau élémentaire provenant du champ de vue élémentaire du capteur, lors des passages successifs des prismes P.

La déviation peut être calculée pour que chaque position du microbalayage recouvre partiellement les positions adjacentes, afin d'obtenir une détection plus sûre. Sur l'exemple illustré, les positions successives ne se recouvrent pas pour simplifier la figure. Même dans le cas où les positions de microbalayage ne sont que jointives, elles permettent, si l'on considère l'ensemble des capteurs élémentaires C subissant un tel microbalayage, de multiplier par 12 le nombre de capteurs de la matrice. Sachant qu'un détecteur à n capteurs élémentaires possède une résolution proportionnelle à $\sqrt{n}$, la résolution de cette matrice est alors multipliée par un facteur supérieur à 3.

Les prismes utilisés sont taillés dans des matériaux transparents dans la bande infrarouge utilisée, par exemple le ZnSe (séléniure de zinc) pour la bande 8 à 12 $\mu$m. Le matériau de base a une forme prismatique régulière, de section triangulaire présentant une arête et deux côtés définissant un angle au sommet, dit angle du prisme. La taille est effectuée selon un axe sensiblement perpendiculaire au plan moyen du prisme de base. Une découpe de forme cylindrique permet par exemple d'obtenir des prismes P de forme ronde et d'épaisseur croissante lorsqu'on s'éloigne de la portion de tranche située au plus près de l'arête du prisme de base.

Les prismes $P_{11}$ à $P_{34}$ représentés sur la figure 4 présentent une telle forme. Ces prismes peuvent être utilisés pour réaliser le balayage B illustré sur la figure 3. Ils sont orientés par rapport à l'axe site Z'Z suivant une flèche figurant au centre de chacun de ces prismes. Cette orientation pointe sur la position référencée A qui correspond à la portion de tranche de plus faible épaisseur de chacun de ces prismes. Pour simplifier le vocabulaire, on désignera dans la suite de l'exposé par "angle au sommet A", le dièdre formé par les plans des faces externes des prismes $P_{11}$ à $P_{34}$, c'est-à-dire finalement la valeur de l'angle au sommet du prisme de base correspondant. La tangente en A à chacun des prismes est parallèle à l'arête du prisme de base et la flèche d'orientation indique la position de cette arête. Les prismes sont montés sur le tambour rotatif 20 (figures 1 et 2) selon cette orientation. Mais, sur la figure 4, ces prismes sont représentés selon une disposition, en matrice, de sorte que leurs positions relatives correspondent aux positions relatives $C_{11}$ à $C_{34}$, occupées successivement par un capteur élémentaire C au cours du microbalayage comme il a été exposé en référence à la figure 3.

La valeur de l'angle d'orientation des prismes $P_{11}$ à $P_{34}$ indiqués sur la figure 4, qui indiquent la position de l'angle au sommet A, est mesurée algébriquement par rapport à l'axe site Z'Z en considérant que la face représentée des prismes est la face incidente des flux $F_i$ provenant des champs d'observation. Les prismes sont rassemblés en matrice sur la figure 4 uniquement pour la commodité de l'exposé mais sont répartis dans l'ordre $P_{11}$ à $P_{34}$, correspondant à celui du balayage B, dans les emplacements du tambour 20 tels que décrits précédemment.

Les valeurs d'angle d'orientation indiquées sur la figure 4 se déduisent alors directement des positions des centres des capteurs $C_{11}$ à $C_{34}$ repérés angulairement par rapport au centre O géométrique du balayage B, à l'aide des formules trigonométriques de base.

Il est possible de calculer la valeur de l'angle au sommet A de chaque prisme. Pour que le pas de microbalayage, c'est-à-dire la distance entre deux positions adjacentes du centre du capteur élémentaire, ait une valeur donnée, par exemple, égal à 15 $\mu$m, cette valeur et cette distance focale du groupe de focalisation conditionnent la valeur de l'angle de résolution, par exemple égal à 0,3 mrad pour un pas de microbalayage de 15 $\mu$m et une distance focale de 50 mm. L'angle de chacun des prismes $P_{11}$ à $P_{34}$ au sommet A peut se déduire de l'angle de déviation moyen nécessaire pour obtenir le positionnement désiré des capteurs, mesuré par la distance entre les positions successives du centre $C_o$ indiquées sur le balayage B et le centre géométrique O de microbalayage. En effet, connaissant l'angle de déviation D que l'on souhaite obtenir, l'angle en A se déduit de D par la formule suivante, obtenue à partir des relations optiques fondamentales du prisme, d'indice de réfraction n et pour un rayon lumineux ayant un angle d'incidence i :

$$D = i + A \sin\left(n \times \sin\left(A - A \sin\left(\frac{\sin i}{n}\right)\right)\right) - A \qquad [1]$$

Il est connu que pour des faibles valeurs de l'angle au sommet d'un prisme, la déviation effectuée par ce prisme est quasi indépendante de l'angle d'incidence. Cette propriété fondamentale des prismes est ainsi pleinement exploitée dans le cadre de l'invention. Le calcul montre plus précisément que l'angle de déviation D d'un rayon lumineux varie très faiblement (quelques %) pour des angles d'incidence i de ce rayon variant de ± 20°, ce qui se traduit par un glissement négligeable de l'image sur le détecteur (de l'ordre du micromètre pour des valeurs d'angle au sommet A très faibles, telles que celles utilisées ci-après). De plus, cette propriété est conservée malgré la rotation du prisme pendant toute la durée d'intégration des charges.

Les exemples de valeurs numériques qui suivent sont donnés en utilisant du ZnSe comme matériau pour les prismes d'indice de réfraction n égal à 2,4 et pour un angle d'incidence i moyen égal à 5°. Les prismes peuvent être classés selon quatre catégories qui possèdent la même valeur d'angle au sommet, car ils provoquent un même positionnement relatif au capteur C par rapport au centre O de balayage, à savoir les prismes $P_{22}$ et $P_{23}$ ; $P_{21}$ et $P_{24}$ ; $P_{12}$, $P_{13}$, $P_{32}$ et $P_{33}$ ; $P_{11}$, $P_{14}$, $P_{31}$ et $P_{34}$. Le tableau ci-après résume les valeurs numériques, pour les prismes $P_{11}$ à $P_{34}$ rangés selon ces catégories, de l'angle de déviation D nécessaire pour obtenir le positionnement T du centre $C_0$ correspondant (ce positionnement est mesuré directement par la distance au centre O de balayage comme annoncé plus haut), et de l'angle de prisme A, déduite de la relation [1] précédente:

| Catégorie de prisme | $P_{22}$ et $P_{23}$ | $P_{21}$ et $P_{24}$ | $P_{12}$, $P_{13}$, $P_{32}$ et $P_{33}$ | $P_{11}$, $P_{14}$, $P_{31}$ et $P_{34}$ |
|---|---|---|---|---|
| T (µm) | 7,5 | 22,5 | 16,8 | 27 |
| D (mrd) | 0,15 | 0,45 | 0,335 | 0,54 |
| A (mrd) | 0,11 | 0,32 | 0,24 | 0,38 |

Si l'on veut utiliser, dans cette application numérique, des groupes de focalisation classiques(référencés 12 sur la figure 1) de distance focale égale à 50 mm pour projeter sur les détecteurs un champ d'observation d'ouverture égale à ±15°, il convient alors d'utiliser des détecteurs de dimensions égales à environ 25 x 25 mm² ces valeurs étant déduites de la relation optique fondamentale définissant la distance focale d'une lentille. En utilisant quatorze emplacements de prismes sur le tambour 20, et en réservant deux de ces emplacements à des fonctions qui sont décrites ultérieurement, l'ouverture du champ de chaque détecteur est alors pris égal à ±13° afin d'obtenir un léger recouvrement pour une ouverture de 360°. Dans ces conditions, pour des groupes de focalisation de distances focales égales à 50 mm, les détecteurs ont alors pour dimension 23 x 23 mm².

Il est à noter que le tambour 20 ne portant que des éléments optiques passifs ne nécessite pas de joint tournant électrique. Ce tambour peut tourner à des vitesses à 1200 tours/mn ou 3000 tours/mn, ce qui correspond à des cadences de veille égales à 20 Hz ou 50 Hz pour un microbalayage complet par tour de tambour. Ces cadences sont tout à fait compatibles avec des durées d'intégration de charges dans les capteurs de l'ordre d'une milliseconde, ce qui permet d'optimiser l'utilisation de matrices détectrices à puits de stockage multiple au vu de leur rendement quantique (de l'ordre de 60%).

Selon cette forme préférée de réalisation, le nombre d'emplacements découpés dans le tambour rotatif, appelés également plages dans la suite de l'exposé, est égal au nombre de détecteurs matriciels. Cette caractéristique permet de simplifier le traitement électronique en ne prévoyant qu'un seul circuit de synchronisation pour commander simultanément toutes les lectures des détecteurs et le traitement des charges pour fournir un signal de sortie adapté au standard du dispositif de visualisation.

Il est intéressant de réserver une ou deux plages, ce qui implique l'utilisation d'un ou deux détecteur matriciels supplémentaires, si on veut conserver les avantages évoqués ci-dessus, afin d'effectuer des mesures complémentaires.

La première mesure consiste à réaliser un réglage de niveau et éventuellement de gain de tous les capteurs d'un même détecteur matriciel. Il est en effet connu que, lors d'une détection infrarouge, la modulation provenant du signal utile peut être très faible par rapport au fond ambiant, le maximum d'émissivité se situant à la température ambiante dans la bande spectrale infrarouge (environ sur la raie située à 10 µm). Il est donc important de réduire les effets dus à la non-homogénéité des capteurs infrarouges entre eux.

Pour effecteur cette compensation, il est connu d'utiliser une même référence de corps noir stabilisé à la température proche de la température ambiante. Pour parfaire la correction, on peut utiliser deux corps noirs à deux températures différentes, mais restant proches de la température ambiante, afin d'effectuer également des compensations en gain pour les différents capteurs élémentaires.

Dans un dispositif de veille classique, il n'est pas aisé d'utiliser des références corps noirs. Mais si l'on dispose, comme c'est le cas présent, d'un tambour tournant pour porter des prismes de microbalayage, il est possible d'utiliser sur ce tambour une ou deux plages supplémentaires, constituées par des plaques de pouvoir émissif proche de 1 dans la bande spectrale considérée et de température proche de la température ambiante. Le nombre de détecteurs matriciels est à augmenter du nombre de plages supplémentaires si l'on veut conserver les avantages évoqués plus haut.

Par exemple, dans le cas d'un microbalayage à douze pas, l'utilisation d'une référence corps noirs fait passer à treize le nombre de détecteurs si l'on veut que chaque détecteur voie la référence une fois par tour, soit une fois par analyse complète de l'image. Il est alors possible de moyenner les informations de référence en réalisant une intégration de charge une fois par tour, ce qui permet de faire une compensation dans un temps très limité. Il est également possible d'utiliser comme référence un des éléments diffusants supplémentaire ou une plaque dépolie de défocalisation.

Une autre mesure consiste à détecter la présence d'un gaz polluant. Il est connu, par exemple du brevet EP 544 262, de détecter de tels gaz en utilisant successivement deux filtres ayant une même bande de transmission, par exemple une bande infrarouge, incluant pour l'un des deux une raie d'absorption caractéristique du gaz recherché. La détection du gaz se déduit alors de la valeur du rapport des flux détectés à travers l'un et l'autre filtre.

Le dispositif de veille selon l'invention permet de mettre en oeuvre dans des conditions optimisées ce type de détection. Il suffit en effet d'ajouter une plage supplémentaire au tambour de microbalayage et d'utiliser un prisme d'angle et d'orientation correspondant à la position de microbalayage choisie pour effectuer la détection de polluants. Le prisme est alors recouvert d'un filtre optique de réjection de la bande d'absorption du polluant. En comparant directement la détection obtenue à l'aide du prisme recouvert du filtre spécial de détection et du prisme correspondant à la même position de microbalayage, il est possible d'en déduire la présence d'un gaz polluant.

D'autres filtres particuliers peuvent être utilisées sur les prismes afin d'obtenir une meilleure discrimination spectrale de cibles par rapport au fond ambiant, ce qui permet de réduire encore le taux de fausse alarme.

Un calcul de dispositif de veille selon l'invention incluant les mesures particulières décrites, est données ci-après. Cet exemple comporte douze prismes de microbalayage, une référence corps noir, et un filtre de détection de polluant disposé dans quatorze plages réparties sur un tambour rotatif de microbalayage. Le dispositif de veille comporte alors quatorze détecteurs matriciels et, pour couvrir en gisement un angle de 360°, chaque détecteur a un champ d'observation de 26° en gisement, ce qui permet d'obtenir un léger recouvrement entre les détecteurs. Si les dimensions d'un capteur élémentaire sont de 20 µm x 20 µm et si le pas de microbalayage souhaité est de 15 µm, pour obtenir un recouvrement afin d'améliorer la précision et le rapport signal/bruit, un calcul élémentaire montre que chaque détecteur matriciel possède alors 576 capteurs élémentaires selon l'axe site et 384 capteurs élémentaires en gisement pour répondre à ce cahier des charges. Dans ces conditions, si l'on désire effectuer le microbalayage souhaité comportant quatre pas en gisement et trois pas en site, les dimensions du détecteur sont d'environ 26 mm en site et 23 mm en gisement. Une ouverture de champ en gisement de 26° comme annoncé, correspond alors à un angle d'ouverture de champ en site d'environ 30°. Une telle matrice peut être obtenue par jonction de différentes matrices de détection connues comportant un nombre adapté de capteurs. Pour une cadence d'analyse de 40 Hz, correspondant à une poursuite de cible efficace, et avec un rendement quantique de microbalayage supposé égal à 60%, le temps d'intégration possible sur chaque position de microbalayage est de l'ordre de la milliseconde, ce qui procure la sensibilité souhaitée.

En ce qui concerne la résolution de l'image, les calculs ont été conduits de manière à obtenir une résolution de l'ordre de 0,3 mrad. Cependant, la précision peut encore être améliorée en mettant en oeuvre un recouvrement des pas de microbalayage afin de réaliser une mesure pondérable.

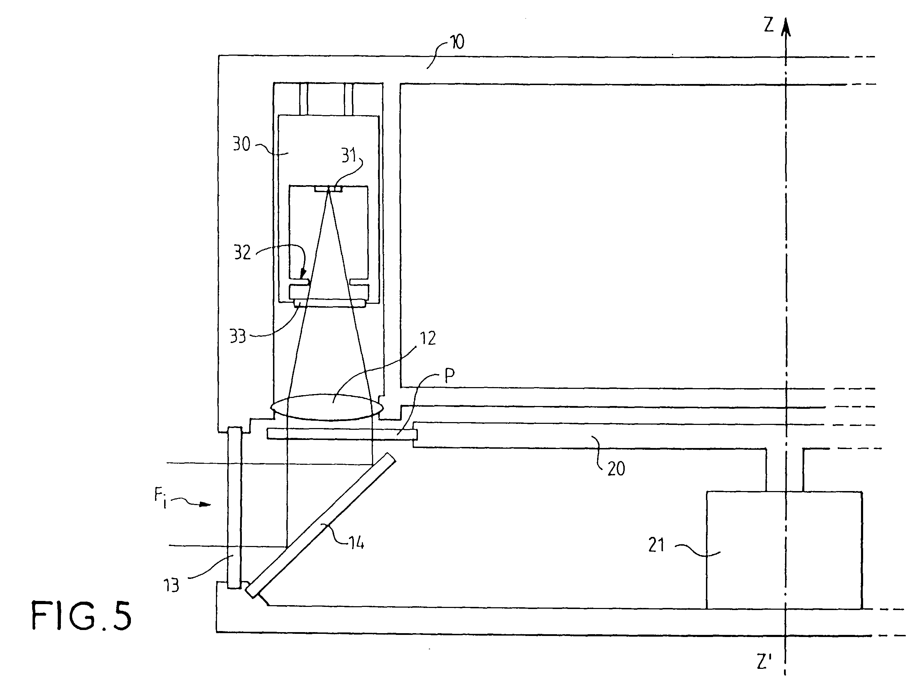

L'invention n'est pas limitée aux exemples décrits ou représentés. En particulier, d'autres agencements sont possibles pour les éléments décrits précédemment ainsi, la figure 5 illustre une autre organisation possible selon un plan de coupe contenant un axe site Z'Z. Sur cette figure, il apparaît que le tambour 20 porte les différents prismes perpendiculairement à l'axe site. Dans ces conditions, le faisceau incident protège le dispositif et réfléchi sur un miroir incliné 14 pour être rejeté sur le détecteur 31 disposé perpendiculairement à l'axe site Z'Z. L'axe optique du groupe de focalisation 12 et l'axe géométrique du cryostat 30 sont parallèles à l'axe site. Le faisceau incident $F_i$ traverse d'abord un hublot 13 disposé dans la structure 10 avant d'être réfléchi par le miroir 14. Selon une autre possibilité, la face de révolution du tambour 20 peut être insérée à l'extérieur des systèmes optiques des détecteurs, des hublots de protection étant alors disposés sur la structure 10.

D'autre part, l'imagerie d'un tel dispositif de veille peut être transmise à un visuel de casque à direction de visualisation asservie, l'opérateur pouvant alors visualiser directement la portion d'espace dans la direction d'observation. Ceci permet de supprimer la présence d'une caméra thermique asservie au mouvement du casque. Il est également possible de répartir sur plusieurs opérateurs observant des directions différentes, l'émergence d'un dispositif de veille selon l'invention dans les directions d'observation des observateurs. Ceci permet de s'affranchir de l'utilisation de plusieurs caméras thermiques asservies sur le mouvement du casque de chaque opérateur.

**Revendications**

1. Dispositif de veille panoramique infrarouge statique à détecteurs matriciels multiples composés de capteurs élémentaires, comportant un système optique associé à chaque détecteur pour projeter sur celui-ci un flux lumineux d'observation ($F_i$) provenant d'une portion d'espace limitée par un champ de vue d'ouverture défini en fonction du nombre de détecteurs, caractérisé en ce que les détecteurs (31) sont fixes et répartis en cercle autour d'un axe site (Z'Z), et en ce que des prismes (P ; $P_{11}$ à $P_{34}$) sont répartis en cercle sur un tambour rotatif (20) d'axe de rotation confondu avec l'axe site (Z'Z) de sorte que, lors de la rotation de ce tambour (20), chaque prisme (P ; $P_{11}$ à $P_{34}$) intercepte successivement, en faisceau parallèle, le flux lumineux ($F_i$) traversant le système optique (11,12) de chaque détecteur (31), les prismes présentant un angle au sommet (A) de valeur et d'orientation déterminés pour provoquer alors une déviation élémentaire des flux lumineux d'observation ($F_i$) correspondant à un déplacement élémentaire virtuel de chaque capteur (C) et définissant un pas de microbalayage.

2. Dispositif de veille panoramique infrarouge selon la revendication 1, caractérisé en ce que le nombre de plages définies pour les emplacements répartis dans le tambour de révolution (20) est égal au nombre de détecteurs matriciels (31).

3. Dispositif selon l'une des revendications 1 à 2, caractérisé en ce qu'au moins une plage est réservée à un élément de référence pour le réglage de niveau ou de gain des capteurs de chaque détecteur matriciel.

4. Dispositif selon la revendication 3, caractérisé en ce que l'élément de référence est un corps noir ou une lame dépolie.

5. Dispositif selon l'une des revendications 1 à 3, caractérisé en ce qu'au moins une plage est réservée à un élément filtrant de détection de gaz provoquant une déviation de flux ($F_i$) identique à celle d'au moins un autre prisme ($P_{11}$ à $P_{34}$).

6. Dispositif selon la revendication 5, caractérisé en ce que l'élément filtrant est un filtre associé à un prisme ayant une raie d'absorption caractéristique d'un gaz polluant.

7. Dispositif selon l'une des revendications 1 à 3, caractérisé en ce qu'au moins une plage est réservée à un élément filtrant dont la bande passante est une sous-bande de la bande spectrale infrarouge de sensibilité des détecteurs (31).

8. Dispositif selon l'une des revendications précédentes, caractérisé en ce que les prismes (P ; $P_{11}$ à $P_{34}$) coupent les flux lumineux d'observation ($F_i$) à l'intérieur du système optique (11,12) de chaque détecteur (31) ou à l'extérieur de ce système optique (11,12), une structure extérieure (10) étant alors équipée respectivement de groupes optiques afocaux (11) ou de hublots disposés sur le trajet des flux d'observation ($F_i$).

9. Dispositif selon l'une des revendications précédentes, caractérisé en ce qu'il est couplé à un visuel de casque équipé d'un écran de visualisation à la direction d'observation asservie.

10. Dispositif selon l'une des revendications 1 à 7, caractérisé en ce qu'il est couplé à autant de visuels de casque que le dispositif de veille possède de détecteurs, chaque visuel de casque étant muni d'un écran de visualisation à la direction d'observation asservie.

FIG.1

FIG.2

FIG.3

FIG.4

FIG.5

Office européen
des brevets

**RAPPORT DE RECHERCHE EUROPEENNE**

Numero de la demande
EP 95 40 2544

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB-A-1 482 753 (DENNIS WILIAM GEORGE BYATT)<br>* page 1, colonne de gauche, ligne 29 - colonne de droite, ligne 59 *<br>* page 2, colonne de gauche, ligne 23 - ligne 36 *<br>* figure 1 *<br>--- | 1 | G02B26/10<br>H04N3/15<br>H04N5/33 |
| A | GB-A-2 143 397 (DAVIN OPTICAL LIMITED)<br>* abrégé; revendications 1-3; figure 1 *<br>--- | 1 | |
| A | WO-A-93 09463 (THOMSON CSF)<br>* abrégé; revendications 1,7; figures 1-3 *<br>--- | 1 | |
| A | EP-A-0 475 670 (MARCONI GEC LTD) 18 Mars 1992<br>* abrégé; revendications 1,8,10,12,14; figures 2,3,5 *<br>--- | 1 | |
| A | EP-A-0 511 899 (THOMSON CSF)<br>* abrégé; figure 2 *<br>----- | 1 | **DOMAINES TECHNIQUES RECHERCHES (Int.Cl.6)**<br><br>G02B<br>H04N<br>G01N<br>G01J<br>G01S |

Le présent rapport a été établi pour toutes les revendications

| Lieu de la recherche | Date d'achèvement de la recherche | Examinateur |
|---|---|---|
| LA HAYE | 9 Janvier 1996 | Van Doremalen, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)